# EUROPÄISCHE PATENTANMELDUNG

(11) **EP 0 623 794 A1**
(43) Veröffentlichungstag der Anmeldung: **09.11.1994**
(21) Anmeldenummer: 94107127.6
(22) Anmeldetag: 06.05.1994
(51) Int. Cl.: F25D 13/06

(54) **Verfahren und Vorrichtung zum Kuehlen von Schokoladenmasse in einem Kuehlschrank**

(30) Priorität: 06.05.1993 IT MI930909
(71) Anmelder: CARLE & MONTANARI S.p.A., I-20141 Milano (IT)
(72) Erfinder: Carle, Marco Giovanni, I-27020 Torr d'Isola (IT)
(74) Vertreter: Mayer, Hans Benno, Dipl.-Ing.

(57) **Zusammenfassung**

Verfahren und Vorrichtung zum Kühlen von Schokoladenmasse in einem Kühlschrank (8), wobei der Innenraum des Kühlschrankes in vier Quadranten (I,II,III,IV) unterteilt ist und ein einziger Luftstrom (f) zum Behandeln des Schokoladenproduktes (7) erzeugt wird, und dieser Luftstrom (f) zuerst auf das Erzeugnis, das sich in der dritten Zone (III) des Quadranten befindet, einwirkt und im Anschluss daran das Erzeugnis, das sich in der zweiten Zone (II) des Quadranten befindet, beeinflusst und anschliessend auf das Produkt einwirkt, das sich in der ersten Zone (I) des Quadranten befindet, um schliesslich auf das Produkt (7) einzuwirken, das sich in der vierten Zone (IV) des Quadranten befindet. Dies wird durch eine Kühleinrichtung (14) ermöglicht, in der die Giessformen (7) zur Aufnahme des Erzeugnisses in Form von senkrechten Säulen angeordnet sind und mittels einer horizontal angeordneten Wand (30) und der Giessformsäulen eine Unterteilung der Kühlkammer in vier Quadranten (I,II,III,IV) erfolgt, dass in Übereinstimmung mit der dritten Zone (III) des Quadranten des Kühlschrankes der Eingang (10) für den Kühlluftstrom vorgesehen ist, und in Übereinstimmung mit der vierten Zone (IV) des Quadranten die Öffnung (11) für den Auslauf des Kühlluftstromes angeordnet ist, und dass für die Erzeugung des Kühlluftstromes eine einzige Belüftungs- und Kühleinrichtung (14) eingesetzt wird, die mit dem Lufteinlauf (10) und dem Luftauslauf (11) des Kühlschrankes verbunden ist.

## Beschreibung

Die vorstehende Erfindung betrifft ein Verfahren und eine Vorrichtung zum Kuehlen von Schokoladenmasse in einem Kuehlschrank.

Es ist vom Stand der Technik her bekannt, dass zum Kuehlen von Schokoladenmasse, die in Giessformen eingebracht ist, welche einen Kuehlschrank durchlaufen, die Notwendigkeit besteht, das Erzeugnis mit unterschiedlichen Luftstroemen zu beeinflussen, wobei diese Luftstroeme bestimmte thermische Merkmale aufweisen, dies um die gewuenschten Ergebnisse hinsichtlich einer korrekten Verfestigung des Produktes zu erreichen.

Aus diesem Grunde wird in den vom Stand der Technik her bekannten Kuehlanlagen ein allmaehliches Abkuehlen des Erzeugnisses durchgefuehrt, indem das Erzeugnis waehrend der ersten 6 bis 18 Minuten der Verweilzeit im Kuehlschrank allmaehlich abgekuehlt wird, um die Temperatur des Schokoladenerzeugnisses sehr langsam um circa 2°C herabzusetzen.

Anschliessend wird in einem zweiten Behandlungsvorgang waehrend weiterer 6 bis 8 Minuten Verweilzeit im Kuehlschrank ein Abkuehlen des Erzeugnisses um weitere 8 bis 10°C durchgefuehrt und mit einem weiteren Behandlungsvorgang, der circa 6 bis 8 Minuten dauert, wird ein Abkuehlen des Erzeugnisses um weitere 6 bis 8°C vorgenommen, um am Ende ein teilweises Anwaermen des Erzeugnisses fuer circa 6 bis 8 Minuten durchzufuehren und das Erzeugnis um 2 bis 3°C anzuwaermen. Dadurch wird vermieden, dass sich auf der Oberflaeche der abgekuehlten Schokoladenmasse eine Tauschicht, unmittelbar nach Austreten aus dem Kuehlschrank, niederschlaegt.

Um diese gesteuerten Kuehlvorgaenge der Schokoladenmasse in aufeinanderfolgenden Behandlungsschritten durchzufuehren, wird z. B. in einem praktischen Beispiel in einer ersten Phase die Schokoladenmasse von 30°C auf circa 28°C, und in einem zweiten Kuehlvorgang von 28°C auf 18°C abgekuehlt und in einer dritten Phase in einem Kuehlvorgang von 18°C auf circa 12°C gekuehlt. Waehrend der letzten Phase der Behandlung wird die Schokolade einer Waermebehandlung und einem Anwaermvorgang auf circa 12°C unterzogen, um die Endtemperatur des Erzeugnisses auf circa 16°C zu bringen.

Die Durchfuehrung des beschriebenen Kuehlverfahrens ist aus dem Stand der Technik her bekannt; es ist auch bekannt, das Erzeugnis unter Zuhilfenahme von vier unterschiedlichen Luftstroemen zu beeinflussen, wobei alle Luftstroeme unterschiedliche physikalische Merkmale aufweisen. Um unterschiedliche Luftstroemungen zu schaffen, werden vier verschiedene Einrichtungen verwendet; jede dieser Einrichtungen besteht im wesentlichen aus einer Kuehlanlage (bzw. einem Waermeaggregat), einem Luefter und einer Steuereinrichtung fuer einen Thermostat.

Es ist naheliegend, dass die Beeinflussung der Schokoladenmasse unter Zuhilfenahme von vier Luftstroemen, die von vier getrennten Einrichtungen erzeugt werden, zu einem wesentlichen Anstieg der Betriebskosten des Kuehlschrankes fuehrt, ferner nehmen die Abmessungen der Kuehl- und Klimatisierungsanlage fuer die Schokoladenmasse erheblichen baulichen Aufwand an.

Aufgabe der vorstehenden Erfindung ist es, die Nachteile des Standes der Technik zu vermeiden und ein Verfahren und eine Vorrichtung vorzuschlagen, mit denen die Vielzahl der thermischen Baueinheiten auf eine einzige thermische Einrichtung vermindert werden kann und dabei gleichzeitig die Moeglichkeit zu schaffen, die baulichen Aufwendungen fuer die Einrichtung wesentlich zu vermindern.

Die Aufgabe wird mit einem Verfahren geloest, dass sich dadurch kennzeichnet, dass der Innenraum des Kuehlschrankes in vier Quadranten unterteilt wird, und die Erzeugung eines einzigen Kuehlluftstromes erfolgt, dass der Kuehlluftstrom zuerst auf das Erzeugnis, das sich in der dritten Zone des Quadranten befindet, einwirkt, um anschliessend das Erzeugnis zu beeinflussen, das sich in der zweiten Zone des Quadranten befindet, dass im Anschluss daran der Luftstrom auf das Erzeugnis einwirkt, das sich in der ersten Zone des Quadranten befindet, und anschliessend das Erzeugnis, das sich in der vierten Zone des Quadranten befindet, vom Luftstrom beeinflusst wird.

Mit einem Verfahren dieser Art und einem einzigen Kuehlluftstrom wird zuerst mit sehr niedriger Temperatur das Erzeugnis beaufschlagt, das sich in einer Abteilung des Kuehlschrankes befindet, in der das Erzeugnis auf eine Minimaltemperatur abgekuehlt werden muss, im Anschluss daran wird durch den leicht angewaermten Luftstrom das Erzeugnis beeinflusst, das in der zweiten Zone des Quadranten angeordnet ist, in welcher eine weniger betonte Kuehlung des Erzeugnisses zu erfolgen hat und im Anschluss daran wird mit dem zwischenzeitlich weiter erwaermten Luftstrom das Erzeugnis beeinflusst, das sich in der ersten Zone des Quadranten (Zufuehrung der Giessbleche) befindet, in der ein sehr langsames Abkuehlen des Erzeugnisses erwuenscht ist. Im Anschluss daran wird durch den zwischenzeitlich angewaermten Luftstrom das Erzeugnis in jenen Giessblechen beeinflusst, die sich in der vierten Zone des Quadranten des Kuehlschrankes befinden. In dieser Zone soll das Erzeugnis leicht angewaermt werden, um dann den Niederschlag von Taufeuchte auf der Flaeche der Schokoladentafel zu vermeiden.

Die erfindungsgemaess ausgebildete Vorrichtung besteht aus einem Kuehlschrank, in dessen Innenraum in Form von senkrechten, nebeneinanderstehenden Saeulen die Giessbleche mit dem Schokoladenerzeugnis angeordnet sind. Unter Zuhilfenahme einer horizontal angeordneten Trennwand erfolgt eine Unterteilung der Kuehlkammer in vier Quadranten. In Uebereinstimmung mit der dritten Zone (III) des Quadranten des Kuehlschrankes ist der Einlauf fuer den Kuehlluftstrom angeordnet und, in Uebereinstimmung mit der vierten Zone (IV) des Quadranten ist der Auslauf fuer den Luftstrom vorgesehen. Zur Erzeugung eines Luftstromes fuer die thermische Behandlung des Schokoladenerzeugnisses ist eine einzige Belueftungs- und Kuehleinrichtung vorgesehen, die mit einem Lufteinlauf in den und einem Luftauslauf aus dem Kuehlschrank verbunden ist.

Mit einer Vorrichtung dieser Art ist es moeglich, den baulichen Aufwand sowie die Abmessungen des Kuehlschrankes wesentlich zu verringern.

Der Erfindungsgegenstand wird nun anhand eines Ausfuehrungsbeispieles genauer beschrieben und in den Zeichnungen dargestellt. Es zeigen:
Fig. 1 in einem Diagramm die herkoemmliche Kurve eines Abkuehlvorganges fuer Schokoladenmasse in den Giessformen,
Fig. 2 schematisch die Arbeitsweise und den Aufbau der erfindungsgemaessen Vorrichtung,
Fig. 3 schematisch den Verlauf des Waermeinhaltes des Kuehlluftstromes, in den einzelnen Zonen des Quadranten im Kuehlschrank, und
Fig. 4 schematisch in perspektivischer Darstellung den erfindungsgemaessen Kuehlschrank unter Darstellung des Stroemungsverlaufes des Luftstromes zum Beeinflussen des Schokoladenproduktes.

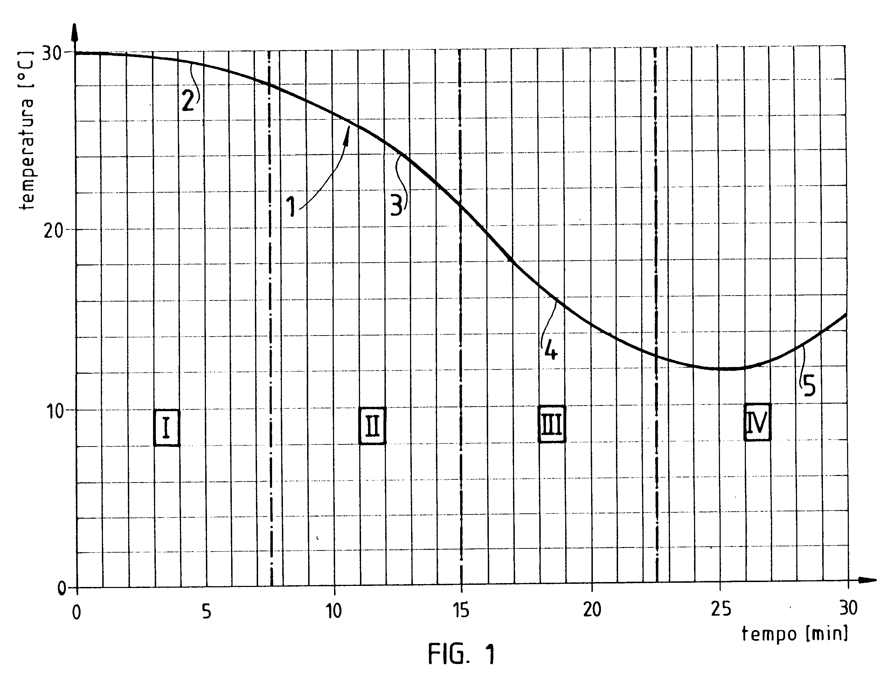

Der Fig. 1 kann ein Schema entnommen werden, das den herkoemmlichen Temperaturverlauf waehrend der Verfestigungsphase von Schokoladenmasse im Inneren eines Kuehlschrankes darstellt.

Der Kurve, die gesamthaft mit 1 gekennzeichnet ist, kann entnommen werden, dass in einem ersten Behandlungsschritt, der mit 2 gekennzeichnet ist, ein sehr langsames Abkuehlen der Schokoladenmasse ueber einen Zeitraum von circa 8 Minuten erfolgt. Dabei wird das Schokoladenerzeugnis von einer Temperatur von 30°C auf eine Temperatur von 28°C abgekuehlt.

In einem darauffolgenden zweiten Behandlungsvorgang, der mit 3 gekennzeichnet ist, wird die Schokoladenmasse waehrend eines Zeitraumes von circa 8 Minuten auf eine ungefaehre Temperatur von circa 20°C abgekuehlt, wogegen in einem darauffolgenden weiteren Behandlungsschritt, der mit 4 gekennzeichnet ist, die Schokolade (waehrend eines Zeitraumes von circa 8 Minuten) mit betonter Temperaturabnahme, von circa 20°C auf circa 12°C abgekuehlt wird; schliesslich, in einer anschliessenden Phase, die mit 5 gekennzeichnet ist, wird das Erzeugnis waehrend eines Zeitraumes von circa 7 Minuten leicht angewaermt, um von einer Temperatur von circa 12°C auf eine Temperatur von 16°C erwaermt zu werden, wodurch eine unerwuenschte Taubildung auf der verfestigten Oberflaeche der Schokoladentafel vermieden wird.

Um die einzelnen Verfahrensschritte, die in der Fig. 1 mit 2, 3, 4 und 5 gekennzeichnet sind, durchzufuehren, war es in der Vergangenheit notwendig, fuer einen Kuehlschrank vier verschiedene Einrichtungen zur thermischen Behandlung der Schokoladenmasse vorzusehen, um mit diesen Einrichtungen unterschiedliche Luftstroemungen zum Kuehlen bzw. zum Erwaermen der Schokoladenmasse zur Verfuegung zu haben.

Das bekannte Verfahren hat sich als brauchbar erwiesen, nur erweist sich der erhebliche bauliche Aufwand dieser bekannten Anlagen als wesentlicher Nachteil.

Da es ferner notwendig war, vier verschiedene thermische Behandlungseinrichtungen vorzusehen, war die Gefahr einer Stoerung oder eines Defekts im Inneren der Kuehleinrichtung sowie ein Ausfall der Kontroll- und Steuergeraete fuer die verschiedenen Einrichtungen zur thermischen Behandlung sehr gross.

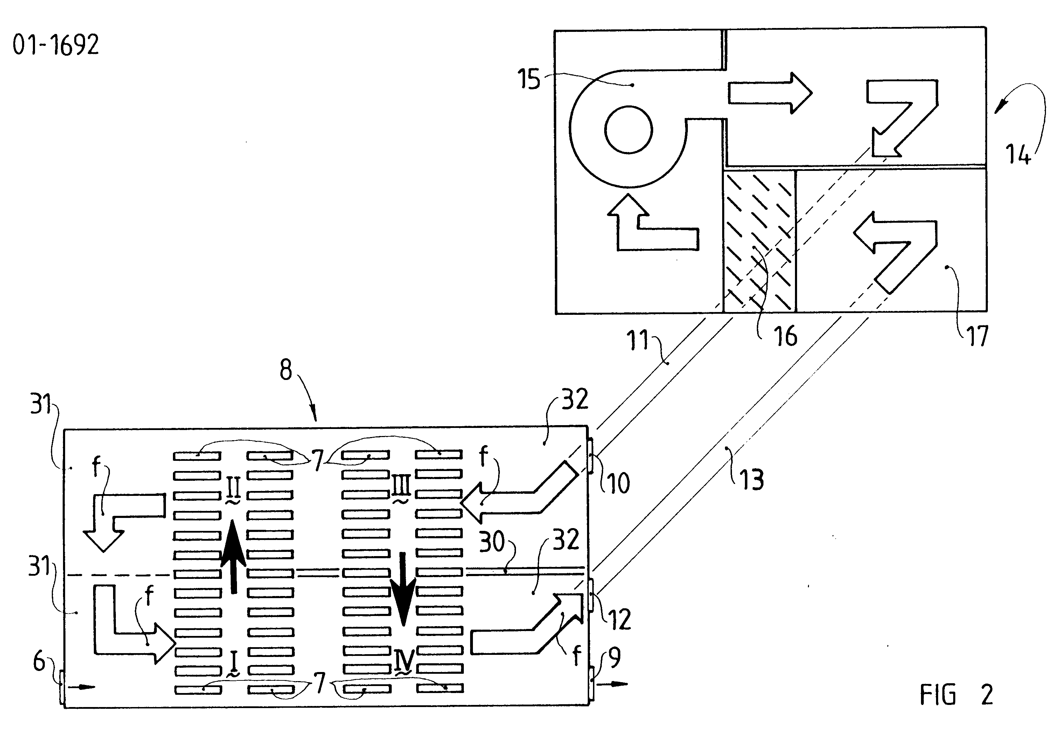

Der Fig. 2 kann schematisch die erfindungsgemaesse Anlage zum thermischen Behandeln von Schokoladenmasse gemaess der Erfindung entnommen werden.

Wie man der Zeichnung entnehmen kann, weist der Kuehlschrank, dem an der Stelle 6 automatisch die Giessformen mit der zu behandelnden Schokoladenmasse zugefuehrt werden, Mittel auf, die ein Foerdern der Giessbleche in einem ersten Bewegungsvorgang von der Unterseite des Kuehlschrankes 8 zu dessen Oberseite ermoeglichen. Nach einer kurzen horizontalen Verschiebebewegung im Kuehlschrank werden die Giessformen 7 in bekannter Weise von oben nach unten befoerdert, um aus dem Kuehlschrank am Auslauf 9 auszutreten.

Der Kuehlschrank ist in vier Quadranten unterteilt, die mit I, II, III und IV gekennzeichnet sind. In Uebereinstimmung mit der Zone III des Quadranten ist der Einlauf 10 fuer die Zufuehrung eines Kuehlluftstromes, der ueber eine Rohrleitung 11 zugefuehrt wird, vorgesehen.

In der Zone IV des Quadranten ist ein Ausgang 12 vorgesehen, der mit einer Rueckfuehrleitung 13 verbunden ist.

Die Rohrleitung 11 zum Zufuehren des Luftstromes steht mit einer einzigen Kuehleinrichtung, die mit 14 gekennzeichnet ist, in Verbindung. Die Kuehleinrichtung 14 nimmt einen einzigen Luefter 15 auf, der den Luftstrom nach Durchlaufen von Kuehlelementen 16 der Leitung 11 zufuehrt, waehrend die Leitung 13 fuer den Ruecklauf der Luft in eine Kammer 17 des Kuehlaggregates 14 zurueckstroemt, um erneut die Kuehlanlage 16 zu durchlaufen, und im Anschluss daran vom Luefter 15 angesaugt zu werden, wobei der Luefter die angesaugte Luft nach erforderlicher Reinigung unter Zuhilfenahme von Filtern erneut der Rohrleitung 11 zufuehrt.

Wie der Fig. 2 zu entnehmen ist, durchstroemt die sehr kalte Luft nach Durchstroemen der Kuehlelemente 16 die Giessformen 7, die in der Zone III des Quadranten angeordnet sind, d. h. jene Zone, in der das Schokoladenerzeugnis der Giessformen 7 einem Luftstrom mit sehr niedriger Temperatur ausgesetzt werden soll (siehe Zone IV des Diagramms gemaess Fig. 1).

Im Anschluss daran verlaesst der Luftstrom die Zone III, um mit hoeherer Temperatur (wie mit 3 im Diagramm nach Fig. 1 angegeben ist) die Giessformen 7 zu ueberstroemen, die sich in der Zone II des Quadranten befinden. Im Anschluss daran sinkt die weiterhin erwaermte Luft, um in der Zone I des Quadranten einzustroemen, um hier die Giessformen 7, die mit einer hoeheren Lufttemperatur behandelt werden sollen, anzustroemen (wie mit dem Bezugszeichen 2 im Diagramm nach Fig. 1 angegeben).

Am Ende verlaesst der Luftstrom die Zone I des Quadranten, um die Giessformen 7 zu beeinflussen, die sich in der Zone IV des Quadranten befinden, wo es erwuenscht ist, das Erzeugnis leicht zu erwaermen (wie mit 5 im Diagramm nach Fig. 1 angegeben ist).

Im Anschluss daran, tritt der Luftstrom aus dem Kuehlschrank ueber die Oeffnung 12 aus, um ueber die Rohrleitung 13 die Kammer 17 zu erreichen, aus der die Luft nach Durchstroemen des Kuehlaggregates (14) erneut durch den Luefter 5 angesaugt wird.

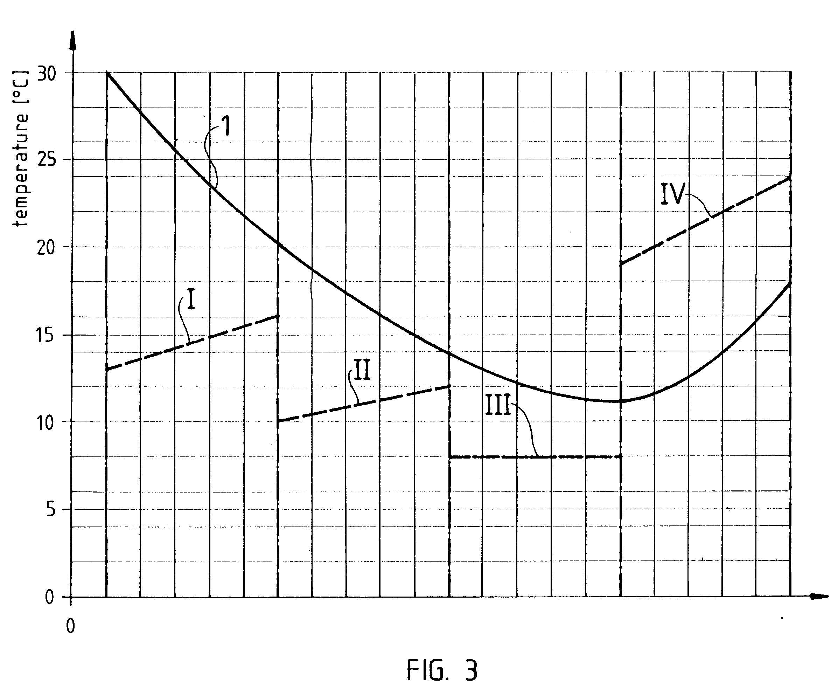

Der Fig. 3 kann noch einmal der Kurvenverlauf 1 des Luftstromes entnommen werden, der den theoretisch idealen Verlauf der Behandlungstemperatur darstellt, mit der auf die Schokoladenmasse in den Giessformen im Inneren des Kuehlschrankes eingewirkt wird.

Wie der Graphik zu entnehmen ist, wird der sehr kalte Luftstrom der Zone (III) des Quadranten zugefuehrt, um im Anschluss daran, die Zone (II) des Quadranten zu durchstroemen, wo sich der Luftstrom erwaermt, da er Waerme vom Produkt aufnimmt. Schliesslich wirkt der Luftstrom auf das Schokoladenprodukt in der Zone (I) des Quadranten ein und erwaermt sich weiter, um in der Zone (IV) des Quadranten die Oberflaeche des verfestigten Schokoladenerzeugnisses leicht zu erwaermen.

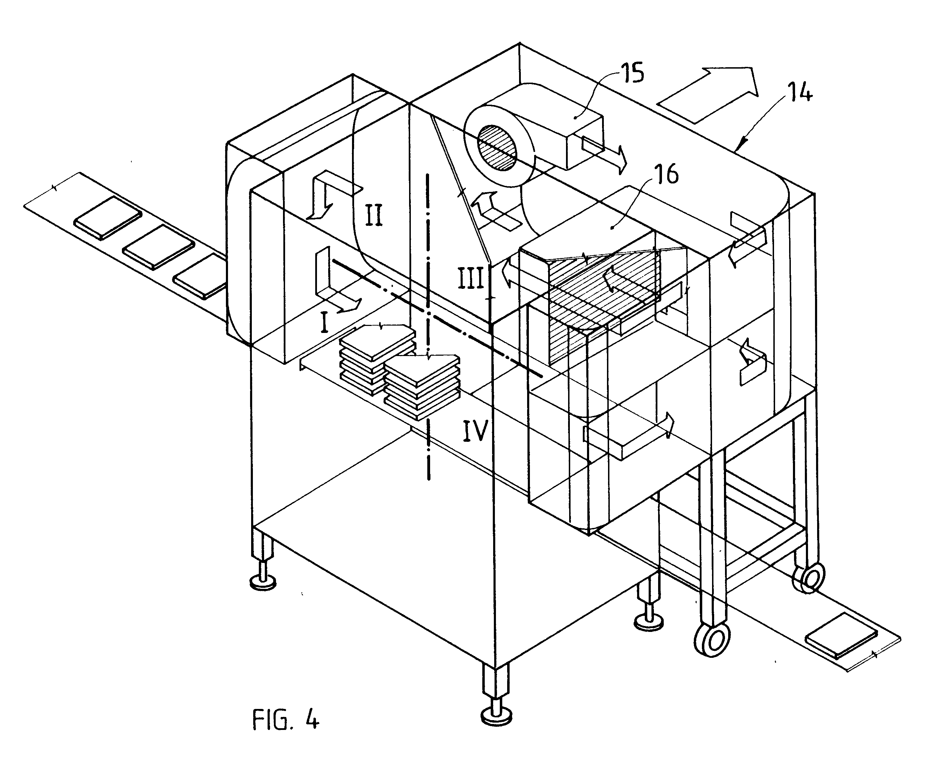

Der Fig. 4 kann entnommen werden, dass eine einzige thermische Behandlungseinheit, die mit 14 gekennzeichnet ist, vorgesehen ist, die einen Luefter 15 aufnimmt, der ueber ein Kuehlaggregat 16 den Kuehlluftstrom mit tieferer Temperatur der Zone (III) des Quadranten im Kuehlschrank zufuehrt. Der Luftstrom bewegt sich dann in die Zone (II) des Quadranten und im Anschluss daran in die Zone (I) des Quadranten, um schliesslich die Zone (IV) des Quadranten zu erreichen.

In Fig. 4 ist aus Gruenden der Uebersichtlichkeit auf eine Darstellung der Trennwand 30 verzichtet worden; deren Anordnung kann deutlich der Fig. 2 entnommen werden.

Der Fig. 2 kann auch entnommen werden, dass vor den vertikal aufgestapelten Giessformen Kammern 31 und 32 gebildet werden, um das Zufuehren und das Weiterleiten des Luftstromes (f) zu steuern.

## Patentansprüche

1. Verfahren zum thermischen Behandeln von Schokoladenmasse, die in Giessformen (7) eingebracht ist und die im Durchlauf in einem Kuehlschrank (8) behandelt wird, **dadurch gekennzeichnet,** dass der Innenraum des Kuehlschrankes (8) in vier Quadranten (I, II, III und IV) unterteilt ist, dass der Luftstrom (f) zuerst das Produkt (7), das sich in der Zone (III) des Quadranten befindet, beeinflusst, dass im Anschluss daran der Luftstrom (f) das Produkt (7), das sich in der Zone (II) des Quadranten befindet, beeinflusst, und im Anschluss daran durch die Luftstroemung (f) auf das Produkt (7) eingewirkt wird, das sich in der Zone (I) des Quadranten befindet und das abschliessend mit dem Luftstrom (f) das Produkt (7) beeinflusst wird, dass sich in der Zone (IV) des Quadranten befindet.

2. Vorrichtung zum Behandeln von Schokoladenmasse, die in die Hohlraeume von Giessformen (7) eingebracht ist und im Durchlauf im Inneren eines Kuehlschrankes (8) behandelt wird, **dadurch gekennzeichnet**, dass der Innenraum des Kuehlschrankes (8) unter Zuhilfenahme von vertikalen, aus Giessformen (7) bestehenden Saeulen und unter Zuhilfenahme einer horizontal angeordneten Trennwand (30) in vier Quadranten (I, II, III und IV) unterteilt ist,
dass in der Zone (III) des Quadranten des Kuehlschrankes (8) eine Einlassoeffnung (10) fuer den Kuehlluftstrom (f) und in der Zone (IV) des Quadranten eine Oeffnung (9) zum Abfluss des Luftstromes (f) vorgesehen ist, und zur Erzeugung des Luftstromes (f) fuer die thermische Behandlung des Schokoladenerzeugnisses eine einzige Luefter- und Kuehleinrichtung (14, 15, 16, 17) vorgesehen ist, die mit dem Lufteinlauf (10) und dem Luftauslauf (9) des Kuehlschrankes (8) verbunden ist.

3. Vorrichtung, nach Patentanspruch 2, **dadurch gekennzeichnet,** dass vor der aus Giessformen (7) gebildeten Saeule, die in der Zone (I und II) der Quadranten angeordnet ist, und vor der aus Giessformen (7) bestehenden Saeule, die in der Zone (III und IV) des Quadranten angeordnet sind, Kammern (31, 32) zum Aufnehmen des Kuehlluftstromes (f) vorgesehen sind.
